(19) Europäisches Patentamt
European Patent Office
Office européen des brevets

(11) **EP 4 763 701 A1**

(12) **EUROPEAN PATENT APPLICATION**
published in accordance with Art. 153(4) EPC

(43) Date of publication:
**24.06.2026  Bulletin 2026/26**

(21) Application number: **24915987.2**

(22) Date of filing: **10.01.2024**

(51) International Patent Classification (IPC):
***B64D 1/00*** (2006.01)

(52) Cooperative Patent Classification (CPC):
**B64D 1/00**

(86) International application number:
**PCT/CN2024/071638**

(87) International publication number:
**WO 2025/147910 (17.07.2025 Gazette 2025/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: SZ DJI Technology Co., Ltd.
**518057 Shenzhen (CN)**

(72) Inventors:
• **FAN, Liming**
**Shenzhen, Guangdong 518057 (CN)**
• **YANG, Zelin**
**Shenzhen, Guangdong 518057 (CN)**
• **ZHAO, Yang**
**Shenzhen, Guangdong 518057 (CN)**

(74) Representative: **Appelt, Christian W.
Boehmert & Boehmert
Anwaltspartnerschaft mbB
Pettenkoferstrasse 22
80336 München (DE)**

(54) **AIRCRAFT SYSTEM, AIRCRAFT, MOVABLE OBJECT, AND CONTROL METHOD THEREFOR**

(57) A control method for an aircraft system. The aircraft system includes an aircraft (100) capable of carrying a rope (200), with a first end of the rope (200) being connected to the aircraft (100) and a second end of the rope being used to carry a target object. The method includes: controlling the aircraft to be located directly above a work area, and controlling the second end of the rope to be located within the work area and a length of the rope released by the aircraft to be greater than or equal to a height of the aircraft relative to the work area; and controlling the aircraft to move to a target position outside an area directly above the work area, such that at least a vehicle body of the aircraft is not directly above the work area. When the aircraft moves to the target position, the second end of the rope is still located within the work area. This method prevents safety issues when working on the second end of the rope in the work area. An aircraft, a movable object, and their control methods are also provided.

Control aircraft to be located directly above a work area, and control the second end of the rope to be located within the work area, such that the length of the rope released by the aircraft is greater than or equal to the height of the aircraft relative to the work area — S110

Control the aircraft to move to a target position outside the work area, such that at least a vehicle body of the aircraft is not directly above the work area, where the second end of the rope remains within the work area when the aircraft moves to the target position — S120

FIG. 1

Processed by Luminess, 75001 PARIS (FR)

## Description

<u>TECHNICAL FIELD</u>

The present disclosure generally relates to the field of aircraft technologies and, more particularly, to an aircraft system, an aircraft, a movable object, and a control method thereof.

<u>BACKGROUND</u>

Aircraft are increasingly used in various industries, such as aerial photography, power line inspection, geological survey, logistics and transportation, agricultural applications, fire fighting and disaster relief, and rescue and patrol.

When used for logistics and transportation, aircraft can use sling systems to load or unload goods. However, if the aircraft hovers directly above the heads of the loading or unloading personnel, there are potential safety hazards.

<u>SUMMARY</u>

In view of this, the present disclosure provides an aircraft system, an aircraft, a movable object, a control method thereof, and a storage medium, to prevent safety issues when working in a work area.

A first aspect of the present disclosure provides a control method for an aircraft system. The aircraft system includes an aircraft capable of carrying a rope, with a first end of the rope being connected to the aircraft and a second end of the rope being used to carry a target object. The method includes: controlling the aircraft to be located directly above a work area, and controlling the second end of the rope to be located within the work area and a length of the rope released by the aircraft to be greater than or equal to a height of the aircraft relative to the work area; and controlling the aircraft to move to a target position outside an area directly above the work area, such that at least a vehicle body of the aircraft is not directly above the work area. When the aircraft moves to the target position, the second end of the rope is still located within the work area.

A second aspect of the present disclosure provides a control method of a movable object. The movable object is configured to carry a rope, with a first end of the rope being connected to the movable object and a second end of the rope being used to carry a target object. The method includes: controlling the movable object to move to a target position; and controlling the second end to move to a work area. The target position is located above the work area and at least partially offset from the work area in the horizontal direction, and the rope released from the movable object is inclined relative to the work area such that the movable object is not located directly above the work area.

A third aspect of the present disclosure provides an aircraft. The aircraft is capable of carrying a rope, with a first end of the rope being connected to the aircraft and a second end of the rope being used to carry a target object. The aircraft includes one or more processors, configured to operate independently or cooperatively to: control the aircraft to be located directly above a work area, and control the second end of the rope to be located within the work area and the length of the rope released by the aircraft being greater than or equal to the height of the aircraft relative to the work area; and control the aircraft to move to a target position outside an area directly above the work area, such that at least a vehicle body of the aircraft is not directly above the work area. When the aircraft moves to the target position, the second end of the rope is still located within the work area.

A fourth aspect of the present provides a movable object. The movable object is capable of carrying a rope, with a first end of the rope being connected to the movable object and a second end of the rope being used to carry a target object, comprising: one or more processors, configured to work independently or cooperatively, to execute steps in the control method for the movable object described above.

A fifth aspect of the present provides a control method of an aircraft system, including: controlling the aircraft to fly to directly above a work area, where the aircraft system includes the aircraft and a rope system attached to the aircraft, the rope system is capable of releasing a rope, and a free end of the rope is used to carry a target object; when the aircraft is directly above the work area, controlling the rope system to release the rope, causing the free end of the rope to descend into the work area; and controlling the aircraft to deviate from the work area while simultaneously controlling the free end of the rope to remain within the work area.

A sixth aspect of the present disclosure provides a loading method of an aircraft, including: controlling an aircraft to fly to directly above a work area, where the aircraft system includes the aircraft and a rope system attached to the aircraft, and the rope system is capable of releasing a rope, a free end of which is used to attach a target object; when the aircraft is directly above the work area, controlling the rope system to release the rope; controlling the length of the rope released by the rope system such that the length of the rope released by the aircraft is greater than or equal to the height of the aircraft relative to the work area; and controlling the aircraft to deviate from the work area while simultaneously controlling the free end of the rope to remain within the work area so that the rope is able load the target object.

A seventh aspect of the present disclosure provides an unloading method of an aircraft, including: controlling the aircraft to fly to directly above a work area, where the aircraft system includes the aircraft and a rope system attached to the aircraft, and the rope system is capable of releasing a rope, the free end of which is attached to a target object; when the aircraft is directly above the work area, controlling the rope system to release the rope, causing the target object attached to the rope to descend into the work area; controlling the length of the rope released by the rope system, such that the length of the rope released by the aircraft is greater than or equal to the height of the aircraft relative to the work area; and controlling the aircraft to deviate from the work area, while simultaneously controlling the free end of the rope to remain within the work area, to facilitate the unloading of the target object from the rope.

An eighth aspect of the present provides a computer-readable storage medium, configured to store a computer program. When the computer program is executed by a processor, the processor is configured to implement any method provided by the present disclosure.

The present disclosure provides an aircraft system, an aircraft, a movable object, a control method thereof, and a storage medium. The aircraft system includes an aircraft capable of carrying a rope, with a first end of the rope being connected to the aircraft and a second end of the rope being used to carry a target object. The method includes: controlling the aircraft to be located directly above a work area, and controlling the second end of the rope to be located within the work area and a length of the rope released by the aircraft to be greater than or equal to a height of the aircraft relative to the work area; and controlling the aircraft to move to a target position outside an area directly above the work area, such that at least a vehicle body of the aircraft is not directly above the work area. When the aircraft moves to the target position, the second end of the rope is still located within the work area. By controlling the aircraft to move to the target position outside the area directly above the work area after the second end of the rope is in the work area, safety issues may be prevented when working on the second end of the rope in the work area.

It should be understood that the above general description and the following detailed description are merely exemplary and explanatory, and do not limit the disclosed contents of the embodiments of the present disclosure.

BRIEF DESCRIPTION OF THE DRAWINGS

To more clearly illustrate the technical solutions of the embodiments of the present disclosure, the drawings used in the description of the embodiments will be briefly introduced below. Obviously, the drawings described below are some embodiments of the present disclosure. For those skilled in the art, other drawings can be obtained based on these drawings without creative effort.

FIG. 1 is a schematic flowchart of a control method of an aircraft system consistent with embodiments of the present disclosure.

FIG. 2 is a schematic diagram of an aircraft system consistent with embodiments of the present disclosure.

FIG. 3a is a schematic diagram of an aircraft located directly above a work area consistent with embodiments of the present disclosure.

FIG. 3b is a schematic diagram of an aircraft moving to a target position consistent with embodiments of the present disclosure.

FIG. 4a is a schematic diagram of a movable range of an aircraft consistent with embodiments of the present disclosure.

FIG. 4b is a schematic diagram of an aircraft located at a boundary of a movable range consistent with embodiments of the present disclosure.

FIG. 5 is a schematic flowchart of another control method of an aircraft system consistent with embodiments of the present disclosure.

FIG. 6 is a schematic flowchart of a loading method of an aircraft system consistent with embodiments of the present disclosure.

FIG. 7 is a schematic flowchart of an unloading method of an aircraft system consistent with embodiments of the present disclosure.

FIG. 8 is a schematic flowchart of a control method of a movable object consistent with embodiments of the present disclosure.

FIG. 9a is a schematic diagram of a movable object located at a target position consistent with embodiments of the present disclosure.

FIG. 9b is a schematic diagram of a second end of a rope located in a work area consistent with embodiments of the present disclosure.

FIG. 10 is a schematic structural diagram of an aircraft consistent with embodiments of the present disclosure.

FIG. 11 is a schematic structural diagram of a movable object consistent with embodiments of the present disclosure.

DETAILED DESCRIPTION OF THE EMBODIMENTS

The technical solutions in the embodiments of the present disclosure will be clearly and completely described below with reference to the accompanying drawings. Obviously, the described embodiments are only a part of embodiments of the present disclosure, but not all embodiments of the present disclosure. Based on the embodiments in the present disclosure, all other embodiments obtained by those skilled in the art without creative effort are within the scope of the present disclosure.

The flowcharts shown in the accompanying drawings are only illustrative examples and do not necessarily include all contents and operations/steps, nor do they necessarily have to be performed in the described order. For example, some operations/steps can be decomposed, combined, or partially merged, so the actual execution order may change according to the actual situation.

Some embodiments of the present disclosure will be described in detail, in conjunction with the accompanying drawings. In the absence of conflict, the embodiments and features described below can be combined with each other.

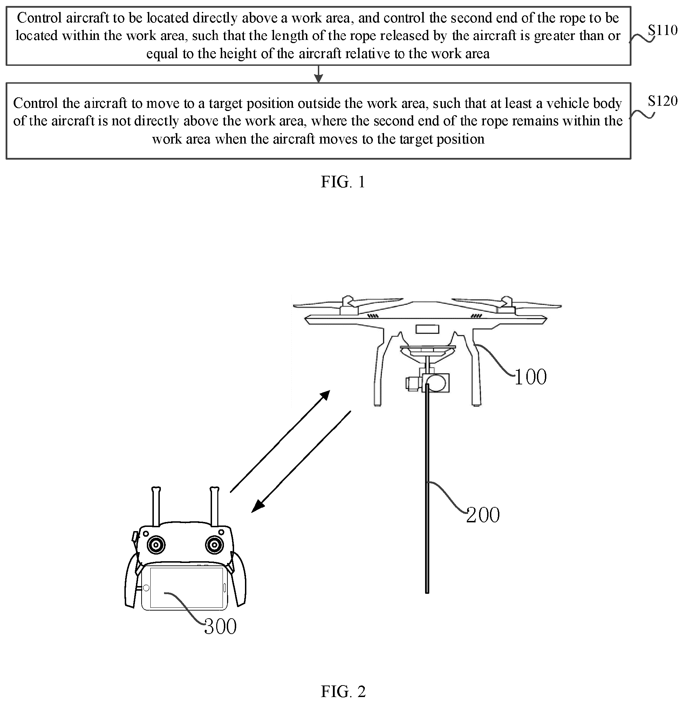

Referring to FIG. 1, FIG. 1 is a schematic flowchart of a control method for an aircraft system provided by one embodiment of the present disclosure.

The aircraft system includes an aircraft 100.

Exemplarily, the aircraft 100 may include an unmanned aerial vehicle. Further, the aircraft 100 may be a rotary-wing unmanned aerial vehicle, such as a quadcopter, hexacopter, or octocopter, or may be a fixed-wing unmanned aerial vehicle.

As shown in FIG. 2, the aircraft 100 is capable of carrying a rope 200. A first end of the rope 200 is connected to the aircraft 100, and a second end of the rope 200 is used to carry a target object. The second end of the rope 200 may also be referred to as a free end.

In some embodiments, the length of the rope 200 may be adjustable. For example, the length extending from the aircraft 100 to the target object may be adjustable. Alternatively, the length of the rope 200 may be a fixed length.

In some embodiments, the aircraft system may include an aircraft 100 and a rope system mounted on the aircraft 100. The rope system may be capable of releasing the rope 200. Optionally, the rope system may also be able to adjust the length of the released rope 200 and may also retract the rope 200.

Optionally, as shown in FIG. 2, the aircraft system may further include a control terminal 300 for the aircraft 100. The control terminal 300 may include at least one of a mobile phone, tablet computer, laptop computer, desktop computer, personal digital assistant, wearable device, or remote controller. Of course, it is not limited to these, for example, the control terminal 300 may include a server.

Further, as shown in FIG. 2, data may be transmitted between the control terminal 300 and the aircraft 100 via a wireless channel. However, it is not limited to this; for example, the control terminal 300 may be connected to the aircraft 100 via a cable.

In some embodiments, the control terminal 300 may be disposed at the second end of the rope 200 and connected to the aircraft 100 via a cable.

As shown in FIG. 1, in some embodiments, the control method of the aircraft system may include S110 to S120.

At S110, the aircraft is controlled to be located directly above a work area, and the second end of the rope is controlled to be located within the work area, and the length of the rope released by the aircraft is controlled to be greater than or equal to the height of the aircraft relative to the work area.

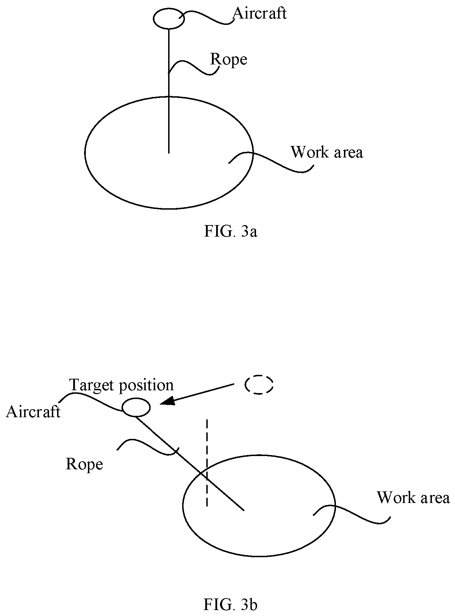

As shown in FIG. 3a, the aircraft is directly above the work area, and the second end of the rope is located within the work area.

In some embodiments, the aircraft may include a logistics aircraft, and the work area may include a preset loading/unloading area for providing a loading/unloading space for the logistics aircraft. The work area may be a stationary area or an area on a mobile platform. For example, a stationary area may be a loading/unloading area in a mountainous area or on a rooftop, and a mobile platform may include, but is not limited to, ships or vehicles. Ships may move autonomously and/or move under the influence of wind, waves, and tides.

In some embodiments, the rope system may be controlled to release the rope when the aircraft is directly above the work area. The length of the rope may be greater than or equal to the height of the aircraft relative to the work area, ensuring the second end of the rope is located within the work area.

For example, the length of the rope released by the rope system may be controlled such that the length of the rope released by the aircraft is greater than or equal to the height of the aircraft relative to the work area.

In some embodiments, as shown in FIG. 3a, in response to the aircraft being directly above the work area, the second end may descend vertically into the work area under the influence of gravity. For example, the rope may be a flexible rope, and the second end of the flexible rope may descend into the work area under the influence of gravity.

When the length of the rope is greater than the height of the aircraft relative to the work area, a portion of the rope may also descend into the work area under the influence of gravity.

In some embodiments, the work area may be a stationary area, and when the aircraft is directly above the work area, the aircraft may hover directly above the work area, such that the second end of the rope is controlled to be positioned within the work area.

In some other embodiments, the work area may be an area on a mobile platform, and when the aircraft is directly above the work area, the aircraft may remain relatively stationary with respect to the mobile platform, such that the second end of the rope is controlled to be positioned within the work area on the mobile platform.

For example, the work area may be an area of a preset size, such as a circular area, a rectangular area, etc.; or the work area may be a portion of a larger area, the boundaries of which may be determined based on marked boundaries on the larger area; or the work area may be a flat area in a mountainous area, on a rooftop, or on a ship.

Within the work area, the target object may be attached to the rope or unloaded from the rope. For example, the second end of the rope may be provided with a placement platform, so that the target object can be placed on or removed from the placement platform. Or the second end of the rope may be provided with a connection mechanism, so that the target object can be connected to or disconnected from the connection mechanism. However, it is not limited to these examples, and, for example, the target object may be directly connected to the second end of the rope.

In the work area, the target object may be manually loaded or unloaded, or the placement platform or connection mechanism may be controlled to load or unload the target object, or equipment in the target area may be controlled to load or unload the target object.

It should be noted that when loading or unloading the target object in the work area, if the aircraft is directly above the work area, there may be a potential safety hazard. For example, in the event of an aircraft crash, it may cause injury to personnel or objects in the work area. To address this technical problem, the embodiments of the present disclosure improve the control method of the aircraft system to prevent safety issues.

At S 120, the aircraft is controlled to move to a target position outside an area directly above the work area, such that at least the vehicle body of the aircraft is not directly above the work area, where the second end of the rope remains within the work area when the aircraft moves to the target position.

As shown in FIG. 3b, when the aircraft is at the target position, the second end of the rope remains within the work area, facilitating the loading or unloading of the target object within the work area. Therefore, even in the event of an aircraft crash, no damage may be caused to personnel or objects in the work area, preventing safety issues.

In some embodiments, the work area may be a stationary area, and when the aircraft is at the target position, it may hover at the target position. This may prevent the second end from moving because of changes in the aircraft's position pulling the rope, facilitating the loading or unloading of the target object within the work area.

In some embodiments, the work area may be an area on a mobile platform, and the aircraft may remain relatively stationary with respect to the mobile platform when it is located at the target position. This may prevent movement of the second end of the rope because of changes in the aircraft's position, facilitating the loading or unloading of the target object within the work area.

The aircraft moving to the target position may refer to moving the aircraft such that a geometric center of the aircraft is located at the target position. However, it is not limited to this. For example, a predetermined part of the aircraft (such as one or more propellers or the nose portion) may be located at the target position. It is understood that when the aircraft is located at the target position, at least a portion of the aircraft may not be directly above the work area.

In some embodiments, in response to the aircraft moving to the target position, neither the vehicle body nor the propellers of the aircraft may be directly above the work area. For example, the entire aircraft may not be directly above the work area, which improves safety.

In some embodiments, when the aircraft moves from directly above the work area to the target position, the aircraft's altitude may remain unchanged, i.e., the aircraft may move horizontally from directly above the work area to the target position. In this case, the aircraft's movement control may be simplified.

In some embodiments, when the aircraft moves from the area directly above the work area to the target position, its altitude may be reduced, as shown in FIG. 3b. The aircraft may fly diagonally downwards to the target position, preventing the second end of the rope from moving outside the work area because of its length limitation.

In some other embodiments, when the aircraft moves from the area directly above the work area to the target position, its altitude may be increased to move away from the work area and ensure safety. Optionally, when the aircraft moves from the area directly above the work area to the target position, the rope length may be adjusted to increase, preventing the second end from moving outside the work area.

In some embodiments, when the aircraft is directly above the work area, the length of the released rope may be equal to the aircraft's altitude relative to the work area. During the process of the aircraft moving away from the work area, adjusting the rope length by releasing the rope may also keep the second end of the rope within the work area. For example, the rope system may include a rotating mechanism (such as a winch) and the rope. The rope may be wound around the rotating mechanism. The rotating mechanism may be controlled to rotate and release the rope as the aircraft deviates from the work area to adjust the rope length; or the rotating mechanism may rotate under the force of gravity while the aircraft deviates from the work area to continue releasing the rope, thereby adjusting the rope length.

For ease of explanation, embodiments where an aircraft moves horizontally from the area directly above the work area to the target position will be used as examples to illustrate the present disclosure.

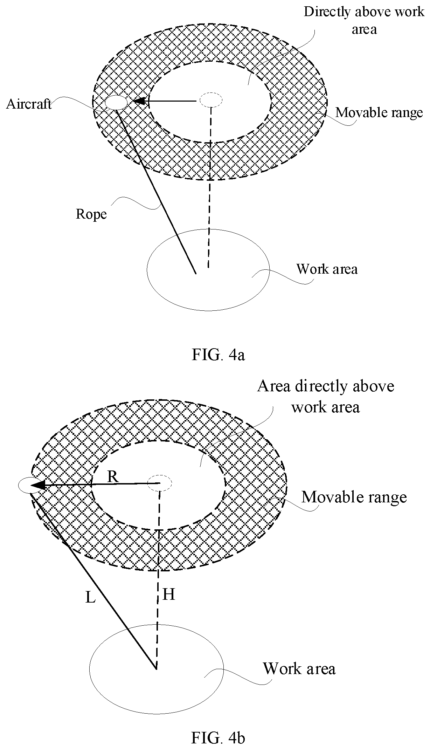

In some embodiments, as shown in FIG. 4a, the target position may be configured as one or more positions within the movable range of the aircraft. The movable range represents a range determined by a maximum horizontal distance the aircraft is able to fly away from the work area when the second end of the rope is within the work area. Controlling the aircraft to move to the target position outside the area directly above the work area may include: controlling the aircraft to move out of the area directly above the work area while the target position is within the movable range.

For example, by controlling the aircraft's position to be within the movable range, it may be ensured that the second end of the rope is within the work area.

For example, the movable range may be determined based on the length of the released rope and the aircraft's height relative to the work area.

For example, when the aircraft's height relative to the work area is fixed, the longer the length of the released rope, the greater the movable range. When the length of the released rope is fixed, the greater the aircraft's height relative to the work area, the smaller the movable range.

For example, as shown in FIG. 4b, the length of the rope released by the aircraft is denoted as L, and the height of the aircraft relative to the work area is denoted as H. Therefore, the maximum horizontal distance R may then be represented as $\sqrt{L^2 - H^2}$ .

A circular range may be determined with the position directly above the work position (e.g., the geometric center of the work area) as the center and the maximum horizontal distance R as the radius. The range of this circular range, excluding the area directly above the work area, may be determined as the movable range. Positioning the aircraft within this movable range may ensure that the second end of the rope is within the work area and that the second end of the rope remains in the work position for loading or unloading the target object at the work position.

It should be noted that when determining the movable range based on the length of the released rope and the height of the aircraft relative to the work area, the movable range may also be determined based on the size of the work area. For example, a larger work area may result in a larger movable range. For example, the second end of the rope may be allowed to move within the work area, as long as it remains within the work area.

In some embodiments, before controlling the aircraft to move to the target position outside the area directly above the work area, the method may further include: receiving a preset operation instruction, where the preset operation instruction includes an instruction to load and/or unload the target object at the second end of the rope.

For example, when the aircraft is directly above the work area, the rope may be released such that the second end of the rope is located within the work area. After receiving the instruction to load and/or unload the target object, the aircraft may be controlled to move to the target position outside the work area, such that the target object is loaded and/or unloaded at the second end of the rope when the aircraft moves to the target position.

For example, the preset operation instruction may originate from the user's first control operation. The first control operation may include, but is not limited to, operation of physical controls (such as buttons or switches) on the control terminal, or operation of virtual controls on the interactive interface displayed on the control terminal.

For another example, the preset operation instruction may originate from the aircraft itself. For instance, the aircraft may be able to independently determine whether the loading and/or unloading conditions of the target object are met. When the loading and/or unloading conditions are met, the aircraft may be controlled to move to the target position outside the area directly above the work area.

For example, the preset operation instruction may originate from the aircraft's recognition of markers. For instance, the aircraft may be equipped with an imaging device that is able to capture images of the ground below it and identify whether there are preset markers corresponding to the loading/unloading area in the image. When the preset markers corresponding to the loading/unloading area are detected in the image, the aircraft may be controlled to move to the target position outside the area directly above the work area.

For example, after personnel in the work area have completed the loading and/or unloading preparations for the target object, they may display a preset marker to the aircraft. When the aircraft recognizes the preset marker in the image, the aircraft may be controlled to move to the target position outside the area directly above the work area, allowing personnel to load and/or unload the target object within the work area.

For example, the preset marker may be placed on the target object. When the target object is in the work area, the aircraft may recognize the preset marker and move to the target position to load the target object within the work area.

In some embodiments, before controlling the aircraft to move to the target position outside the area directly above the work area, the method may further include: receiving a second control operation from a user, where the second control operation indicates the target position. That is, based on the user's second control operation, the aircraft may be controlled to move to the target position corresponding to the second control operation, such that the aircraft moves outside the area directly above the work area.

For example, the aircraft system may be configured to display the movable range of the aircraft. For example, the movable range may be displayed on the aircraft's control terminal, such that the target position of the aircraft is within the movable range when the user determines the target position through the second control operation, ensuring that the second end of the rope is within the working area.

For another example, the second control operation may include the user's operation of controls on the aircraft's control terminal, where the controls may be used to control the aircraft's flight direction and/or flight speed. There may be one or more controls, such as, controls for controlling the aircraft's forward and backward movement and/or controls for controlling the aircraft's left and right movement. For instance, the controls may include physical controls (such as joysticks) on the control terminal, and/or virtual controls on the interactive interface displayed on the control terminal.

For example, controlling the aircraft to move to the target position outside the area directly above the work area may include: in response to the target position of the aircraft being within the aircraft's movable range, controlling the aircraft to move to the target position outside the direct upper part of the work area. As shown in FIG. 4a, when the target position corresponding to the second control operation is within the movable range, there may still be a relatively large distance between the aircraft and the boundary of the movable range. The aircraft may be controlled to move to the target position corresponding to the second control operation according to the user's second control operation, thus moving away from the area directly above the work area and ensuring the safety of the work area.

For example, controlling the aircraft to move to the target position outside the area directly above the work area may include: in response to the target position of the aircraft being at the boundary of the aircraft's movable range, prohibiting the aircraft from moving outside the aircraft's movable range. For example, in response to the target position of the aircraft being at the boundary of the aircraft's movable range, the aircraft may be controlled to move along the direction indicated by the target position to the boundary of the movable range. Or, in response to the target position of the aircraft being at the boundary of the aircraft's movable range, the aircraft may be prohibited from moving. As shown in FIG. 4b, the target position of the aircraft may be located at the boundary of the movable range. By prohibiting the aircraft from moving outside the movable range, the second end may be prevented from moving outside the work area because of the rope length limitation.

The aircraft's position at the boundary of the movable range may include being located on the boundary of the movable range, for example, on a circle defined by radius R in FIG. 4b; or it may include being located within a preset range corresponding to the boundary of the movable range, where the distance between the boundary of the preset range and the boundary of the movable range may be less than or equal to a preset distance.

In some embodiments, the second control operation may include the user determining a target image area on a display screen, where the target image area indicates the target position. For example, the control terminal may obtain an image captured by an imaging device mounted on the aircraft and display the image on the display screen. Based on the target image area determined in the image by the user's second control operation, the spatial position corresponding to the target image area may be determined as the target position. For example, based on the camera intrinsics of the imaging device, the aircraft's attitude information, the aircraft's position information (including altitude information), or radar information, a function model constructed from the pixels in the image may be used to determine the spatial position corresponding to the target image area as the target position.

For example, in response to the target image area being within the movable range of the aircraft, controlling the aircraft to move to the target position outside the area directly above the work area may be executed.

For example, when the target image area determined by the user is within the displayed movable range, for instance, when the projection of the target image area onto the plane where the movable range is located is within the boundary of the movable range, it may be determined that the target position corresponding to the target image area is within the movable range of the aircraft. The aircraft may then be controlled to move to the target position corresponding to the target image area, away from the area directly above the work area, ensuring the safety of the work area.

For example, the control method may further include: in response to the target image area being outside the movable range of the aircraft, controlling the aircraft to move along the direction indicated by the position of the target image area to the boundary of the movable range. When the target image area determined by the user is outside the displayed movable range, for instance, when the projection of the target image area onto the plane where the movable range is located is outside the boundary of the movable range, it may be determined that the target position corresponding to the target image area is outside the movable range of the aircraft. By controlling the aircraft to move to the boundary of the movable range, it may be possible to prevent the second end of the rope from moving outside the work area because of the length limitations. Further, the direction of the aircraft's movement may be the same as the direction corresponding to the target image area determined by the user, resulting in a better user experience.

For example, the control method may further include: prohibiting the aircraft from moving in response to the target image area being outside the movable range of the aircraft. When the target position corresponding to the target image area is outside the movable range of the aircraft, prohibiting the aircraft from moving may prevent the second end of the rope from moving outside the work area because of the rope length limitation.

In some embodiments, the control method may further include: outputting an alarm message when the distance between the aircraft's position and the boundary of the aircraft's movable range is less than or equal to a preset distance threshold.

For example, when controlling the aircraft to move away from the area directly above the work area according to a user's second control operation (operation on a control and/or operation to determine the target image area), the distance between the aircraft's current position and the boundary of the movable range may be obtained. When the distance is less than or equal to the preset distance threshold, the alarm message may be output to prompt the user to stop the second control operation or adjust the second control operation, to prevent erroneous second control operations from causing the second end of the rope to move outside the work area.

In some embodiments, the control method may further include: determining the target position based on the movable range of the aircraft and environmental information of the aircraft's position.

For example, the aircraft may be equipped with sensors, including but not limited to image sensors, laser sensors, or light sensors. The environmental information may include at least one of obstacle information, terrain information, or light intensity information, but is not limited to these. For example, the environmental information may also include signal strength information, which indicates the communication quality of the wireless channel between the aircraft and the control terminal.

By adding the influence of the environmental information when determining the target position, for example, when the aircraft determines the target position itself or according to the second control operation by the user, the aircraft may safely and reliably move to the target position and hover safely at the target position.

For example, the environmental information may include the obstacle information. Determining the target position based on the mobile range of the aircraft and the environmental information of the aircraft's position may include: determining the target position based on positions of obstacles within the mobile range of the aircraft, where the target position is different from the positions of the obstacles, allowing the aircraft to avoid obstacles while moving away from the area directly above the work area and ensuring the aircraft's safety.

In the control method for the aircraft system provided by the present disclosure, the aircraft system may include the aircraft capable of carrying the rope. The first end of the rope may be connected to the aircraft, and the second end of the rope may be used to carry the target object. The method may include: controlling the aircraft to be directly above the work area, and controlling the second end of the rope to be located within the work area, with the length of the rope released by the aircraft greater than or equal to the height of the aircraft relative to the work area; and controlling the aircraft to move to the target position outside the area directly above the work area, such that at least the vehicle body of the aircraft is not directly above the work area. When the aircraft moves to the target position, the second end of the rope may be still located within the work area. By controlling the aircraft to move to the target position outside the area directly above the work area after the second end of the rope after the second end of the rope is located in the work area, safety issues may be prevented when working on the second end of the rope in the work area.

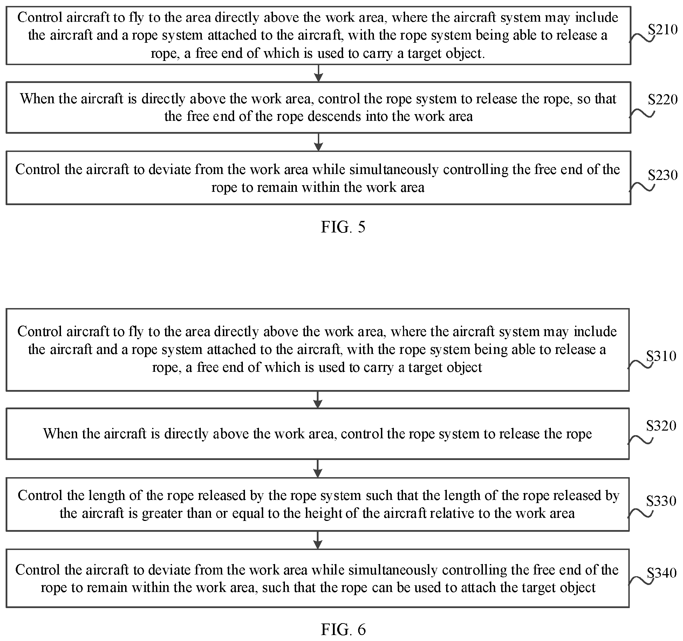

Referring to FIG. 5 in conjunction with the foregoing embodiments, FIG. 5 is a schematic flowchart of a control method of an aircraft system according to another embodiment of the present disclosure. As shown in FIG. 5, the method includes S210 to S230.

At S210, an aircraft is controlled to fly to the area directly above the work area. The aircraft system may include the aircraft and a rope system attached to the aircraft. The rope system may be able to release a rope, a free end of which is used to carry a target object.

For example, the aircraft may include a logistics aircraft, and the work area may include a preset loading/unloading area for providing loading/unloading space for the logistics aircraft.

As shown in FIG. 3a, the aircraft is located directly above the work area, and the free end of the rope released by the rope system (or referred to as a second end, i.e., the end away from the aircraft) is located in the work area.

At S220, when the aircraft is directly above the work area, the rope system is controlled to release the rope, so that the free end of the rope descends into the work area.

In some embodiments, the rope system may include a rotating mechanism (such as a winch) and a rope wound around the rotating mechanism. Releasing the rope may include controlling the rotating mechanism to rotate and release the rope, or may include releasing the rotating mechanism so that it is able to rotate under the weight of the rope to release the rope. The free end of the rope may descend into the work area under the weight of gravity.

At S230, the aircraft is controlled to deviate from the work area while simultaneously controlling the free end of the rope to remain within the work area.

In some embodiments, the aircraft may deviate from the work area on its own, or may deviate from the work area based on user control operations. For example, the aircraft may deviate from the work area based on a first user control operation, and determine the distance and/or direction of deviation based on a second user control operation.

As shown in FIG. 4b, the aircraft may deviate from the work area such that at least the vehicle body of the aircraft is not directly above the work area, allowing for the loading or unloading of the target object within the work area. Even in the event of an aircraft crash, no damage may be caused to personnel or objects in the work area, preventing safety issues.

In some embodiments, controlling the aircraft to deviate from the work area while simultaneously controlling the free end of the rope to remain within the work area may include: releasing the rope during the process of the aircraft deviating from the work area such that the free end of the rope remains within the work area.

For example, as the aircraft deviates from the work area, a target length for releasing the rope may be determined based on the distance the aircraft deviates from the work area and the aircraft's height relative to the work area. The actual length of the released rope may be controlled to be greater than or equal to the target length, so that the free end of the rope remains within the work area.

For example, the target length may be determined based on the square root of the sum of the squares of the distance the aircraft deviates from the work position (e.g., the geometric center of the work area) and the aircraft's height relative to the work area.

For example, the length of the released rope may be obtained. When the length of the released rope is greater than or equal to a preset length threshold, control of the aircraft to continue deviating from the work area may be stopped, and a prompt message may be output. Stopping control of the aircraft to continue deviating from the work area may include, for example, stopping response to the second user control operation, and a prompt message may be output to prompt the user to stop performing the second control operation or adjust the second control operation. For example, the preset length threshold may be, for example, 80% to 100% of the total rope length. The second end may be prevented from moving outside the work area because of rope length limitations.

In some embodiments, controlling the aircraft to deviate from the work area while simultaneously controlling the free end of the rope to remain within the work area may include: obtaining the tension of the rope, and determining whether the free end of the rope moves within the work area based on the tension. For example, if the tension of the rope undergoes a sudden change, such as a sudden decrease, the control of the aircraft to continue deviating from the work area may be stopped and a prompt message may also be output. A sudden change in the rope tension may include the change in tension within a preset time period being greater than or equal to a sudden-change threshold.

In some embodiments, the work area may be a stationary area. When the aircraft is directly above the work area, the aircraft may hover directly above the work area. After deviating from the work area, the aircraft may hover at the deviated position. Alternatively, the work area may be an area on a mobile platform. When the aircraft is directly above the work area, the aircraft may remain relatively stationary with respect to the mobile platform. After deviating from the work area, the aircraft may remain relatively stationary with respect to the mobile platform.

The control method for the aircraft system provided by the present disclosure may include: controlling the aircraft to fly directly above a work area, wherein the aircraft system includes the aircraft and the rope system attached to the aircraft with the rope system being capable of releasing the rope, the free end of which may be used to carry the target object; when the aircraft is directly above the work area, controlling the rope system to release the rope, causing the free end of the rope to descend into the work area; and controlling the aircraft to deviate from the work area while simultaneously controlling the free end of the rope to remain within the work area. By releasing the rope after the aircraft is directly above the work area, causing the free end of the rope to descend into the work area, and then controlling the aircraft to deviate from the work area, damage to workers or objects in the work area may be prevented, and keeping the free end of the rope within the work area may facilitate work within the work area.

As shown in FIG. 6, which is a flowchart illustrating a control method for an aircraft system according to another embodiment of the present disclosure, in conjunction with the foregoing embodiments, the method includes S310 to S340.

At S310, an aircraft is controlled to fly to the area directly above the work area. The aircraft system may include the aircraft and a rope system attached to the aircraft. The rope system may be able to release a rope, a free end of which is used to carry a target object.

For the details of S310, references may be made to S210 in the previous embodiments, which will not be repeated here.

At S320, when the aircraft is directly above the work area, the rope system is controlled to release the rope.

At S330, the length of the rope released by the rope system is controlled such that the length of the rope released by the aircraft is greater than or equal to the height of the aircraft relative to the work area.

In some embodiments, the rope system may include a rotating mechanism (such as a winch) and a rope wound around the rotating mechanism. The rotating mechanism may be controlled to rotate to adjust the length of the released rope. The length of the rope released by the aircraft being greater than or equal to the height of the aircraft relative to the work area may allow the free end of the rope to descend into the work area.

At S340, the aircraft is controlled to deviate from the work area while simultaneously controlling the free end of the rope to remain within the work area, such that the rope can be used to attach the target object.

For example, the length of the rope released by the aircraft may be greater than the height of the aircraft relative to the work area, allowing the free end of the rope to remain within the work area when the aircraft deviates from the work area.

For example, controlling the aircraft to deviate from the work area while simultaneously controlling the free end of the rope to remain within the work area may include: releasing the rope during the process of the aircraft deviating from the work area such that the free end of the rope remains within the work area. For example, when the length of the rope released by the aircraft may be equal to the height of the aircraft relative to the work area, the rope may be released when the aircraft deviates from the work area such that the free end of the rope remains within the work area. This may be achieved by controlling the rotating mechanism to rotate and release the rope to increase the length of the rope, or by controlling the rotating mechanism under the force of gravity to continue releasing the rope, thereby increasing the length of the rope.

For example, when the aircraft deviates from the work area, the aircraft's altitude may be lowered, which also allows the free end of the rope to remain within the work area. For example, when the length of the rope released by the aircraft is equal to the height of the aircraft relative to the work area, the aircraft's altitude may be lowered when the aircraft deviates from the work area.

In some embodiments, for the details of S340, references may be made to the aforementioned S230, which will not be repeated here.

The mounting method of the aircraft provided by the present disclosure may include: controlling the aircraft to fly directly above a work area, where the aircraft system includes the aircraft and the rope system mounted on the aircraft, the rope system being capable of releasing the rope, the free end of which is used to mount the target object; when the aircraft is directly above the work area, controlling the rope system to release the rope; controlling the length of the rope released by the rope system such that the length of the rope released by the aircraft is greater than or equal to the height of the aircraft relative to the work area; and controlling the aircraft to deviate from the work area, while simultaneously controlling the free end of the rope to remain within the work area, to facilitate the mounting of the target object by the rope. By releasing the rope when the aircraft is directly above the work area, and after the length of the released rope is greater than or equal to the height of the aircraft relative to the work area, controlling the aircraft to deviate from the work area, damage to workers or objects in the work area may be prevented, and keeping the free end of the rope within the work area may facilitate work in the work area.

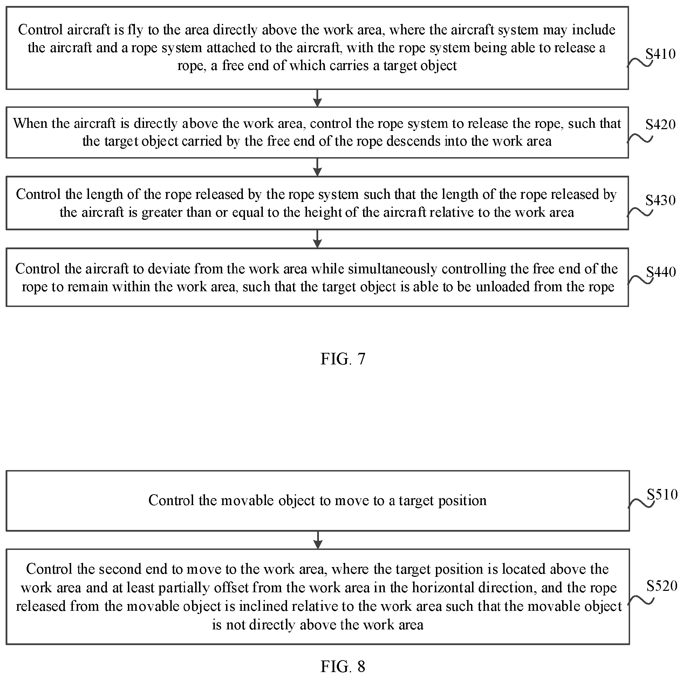

Referring to FIG. 7 in conjunction with the foregoing embodiments, FIG. 7 is a flowchart of an unloading method for an aircraft system according to another embodiment of the present disclosure. As shown in FIG. 7, the method includes S410 to S440.

At S410, an aircraft is controlled to fly to the area directly above the work area. The aircraft system may include the aircraft and a rope system attached to the aircraft. The rope system may be able to release a rope, a free end of which carries a target object.

For the details of S410, references may be made to S210 in the previous embodiments, which will not be repeated here.

At S420, when the aircraft is directly above the work area, the rope system is controlled to release the rope, such that the target object carried by the free end of the rope descends into the work area.

At S430, the length of the rope released by the rope system is controlled such that the length of the rope released by the aircraft is greater than or equal to the height of the aircraft relative to the work area.

In some embodiments, the rope system may include a rotating mechanism (such as a winch) and a rope wound around the rotating mechanism. The rotating mechanism may be controlled to rotate to adjust the length of the released rope. The length of the rope released by the aircraft being greater than or equal to the height of the aircraft relative to the work area may allow the target object carried by the free end of the rope to descend into the work area.

At S440, the aircraft is controlled to deviate from the work area while simultaneously controlling the free end of the rope to remain within the work area, such that the target object is able to be unloaded from the rope.

For example, controlling the aircraft to deviate from the work area while simultaneously controlling the free end of the rope to remain within the work area may include: releasing the rope during the process of the aircraft deviating from the work area such that the free end of the rope remains within the work area.

In some embodiments, for the details of S440, references may be made to the aforementioned S230, which will not be repeated here.

The unloading method of the aircraft provided by the present disclosure may include: controlling the aircraft to fly directly above the work area, where the aircraft system includes the aircraft and the rope system mounted on the aircraft, the rope system being capable of releasing the rope, the free end of which is carrying the target object; when the aircraft is directly above the work area, controlling the rope system to release the rope; controlling the length of the rope released by the rope system, such that the target objected carried by the free end of the rope descends into the work area; controlling the length of the rope released by the aircraft to be greater than or equal to the height of the aircraft relative to the work area; and controlling the aircraft to deviate from the work area, while simultaneously controlling the free end of the rope to remain within the work area, to facilitate the unloading of the target object from the rope. By releasing the rope when the aircraft is directly above the work area such that the target object descends into the work area, and after the length of the released rope is greater than or equal to the height of the aircraft relative to the work area, controlling the aircraft to deviate from the work area, damage to workers or objects in the work area may be prevented, and keeping the free end of the rope within the work area may facilitate work in the work area.

Referring to FIG. 8 in conjunction with the foregoing embodiments, FIG. 8 is a schematic flowchart of a control method of a movable object according to another embodiment of the present disclosure.

The movable object may be an aircraft, but is not limited thereto, and for example may be a crane or the like. The aircraft may be an unmanned aircraft. Further, the aircraft may be a rotary-wing unmanned aerial vehicle, such as a quadcopter, a hexacopter, or an octocopter, or may be a fixed-wing unmanned aerial vehicle. For ease of explanation, the embodiments of the present disclosure are mainly described by taking the aircraft as an example.

The movable object is configured to carry a rope, where a first end of the rope is connected to the movable object, and a second end of the rope is configured to carry a target object.

As shown in FIG. 8, the control method of the movable object includes S510 to S520.

At S510, the movable object is controlled to move to a target position.

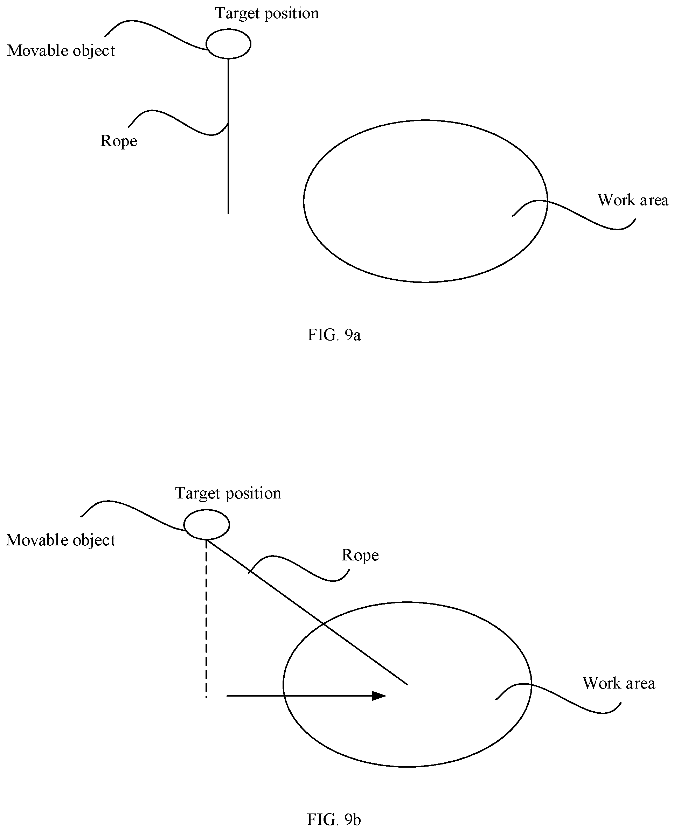

In some embodiments, in response to the movable object moving to the target position, neither the vehicle body nor the propeller of the movable object may be directly above the working area. As shown in FIG. 9a, the movable object may move to the target position, which is a position outside the area directly above the working area.

In some embodiments, the movable object may include a logistics movable object, such as a logistics aircraft. The working area may include a preset loading/unloading area for providing loading/unloading space for the logistics movable object.

The working area may be a stationary area or an area on a mobile platform. For example, if the working area is a stationary area, the aircraft may hover at the target position. If the working area is an area on a mobile platform, the aircraft may remain relatively stationary with respect to the mobile platform when it is at the target position.

At S520, the second end is controlled to move to the work area, where the target position is located above the work area and at least partially offset from the work area in the horizontal direction, and the rope released from the movable object is inclined relative to the work area such that the movable object is not directly above the work area.

In some embodiments, controlling the second end to move to the work area may include: in response to the movable object being located at the target position and the second end being located directly below the target position, controlling a traction device to pull the second end to move to the work area. As shown in FIG. 9b, the second end of the rope may be pulled to move to the work area such that operations such as loading or unloading the target object may be performed in the work area. For example, the traction device may include an unmanned vehicle, but it is not limited to this; for example, it may be a traction device mounted on a target object transport device.

In some other embodiments, controlling the second end to move to the work area may include: before controlling the movable object to move to the target position, controlling the movable object to move directly above the work area, such that the second end descends into the work area under the influence of gravity, and the length of the rope released by the movable object is greater than the height of the movable object relative to the work area. As shown in FIG. 3a, the movable object (e.g., an aircraft) is located directly above the work area, and the second end of the rope is located within the work area. Then, as shown in FIG. 3b, the movable object (e.g., the aircraft) moves to the target position. When the aircraft is at the target position, the second end of the rope remains within the work area, such that the target object may be loaded or unloaded within the work area.

For example, as shown in FIG. 3a, in response to the movable object being directly above the work area, the second end may descend vertically into the work area under the influence of gravity.

In some embodiments, the target position may be configured to be one or more positions within the movable range of the movable object, and the movable range may represent the range from which the movable object is able to deviate from the work area by a maximum horizontal distance when the second end of the rope is within the work area. Controlling the movable object to move to the target position outside the area directly above the work area may include: controlling the movable object to move outside the area directly above the work area, where the target position is within the movable range.

For example, the movable range may be determined based on the length of the released rope and the height of the movable object relative to the work area.

In some embodiments, before controlling the movable object to move to the target position outside the area directly above the work area, the method may further include: receiving a preset operation instruction, where the preset operation instruction includes instructions to load and/or unload the target object at the second end of the rope.

For example, the preset operation instruction may originate from a first control operation by a user.

For example, the preset operation instruction may originate from the movable object itself.

For example, the preset operation instruction may originate from the movable object's recognition of a marker.

In some embodiments, before controlling the movable object to move to the target position outside the work area, the method may further include: receiving a second control operation from a user, where the second control operation indicates the target position.

For example, the movable range of the movable object may be displayed. For example, the movable range may be displayed on a control terminal of the movable object.

For example, the second control operation may include the user identifying a target image area on a display screen, with the target image area indicating the target position.

For example, in response to the target image area being within the movable range of the movable object, controlling the movable object to move to the target position outside the work area may be performed.

For example, the method may further include: in response to the target image area being outside the movable range of the movable object, controlling the movable object to move along a direction indicated by the position of the target image area to the boundary of the movable range.

For example, the method may further include: in response to the target image area being outside the movable range of the movable object, prohibiting the movable object from moving.

For example, the second control operation may include the user's operation of controls on a control terminal of the movable object, with the controls being used to control the flight direction and/or flight speed of the movable object.

For example, controlling the movable object to move to the target position outside the work area may include: in response to the target position of the movable object being within the movable object's movable range, controlling the movable object to move to the target position outside the work area; and/or in response to the target position of the movable object being outside the boundary of the movable object's movable range, prohibiting the movable object from moving outside the movable object's movable range.

In some embodiments, the method may further include: outputting an alarm message when the distance between the position of the movable object and the boundary of the movable object's movable range is less than or equal to a preset distance threshold.

In some embodiments, the method may further include: determining the target position based on the movable object's movable range and environmental information of the movable object's position.

For example, the environmental information may include obstacle information. Determining the target position based on the movable object's movable range and the environmental information of the movable object's position may include: determining the target position based on the positions of obstacles within the movable object's movable range, where the target position is different from the positions of the obstacles.

In some embodiments, the work area may be a stationary area. When the movable object is directly above the work area, the movable object may hover directly above the work area. When the movable object is at the target position, the movable object may hover at the target position.

In other embodiments, the work area may be an area on a mobile platform. When the movable object is directly above the work area, the movable object may remain relatively stationary with respect to the mobile platform. When the movable object is at the target position, the movable object may remain relatively stationary with respect to the mobile platform.

In the control method for the movable object provided by the present disclosure, the movable object may be configured to carry a rope, with a first end connected to the movable object and a second end configured to carry a target object. The method may include: controlling the movable object to move to the target position; and controlling the second end to move to the work area. The target position may be located above the work area and at least partially offset horizontally from the work area. The rope released from the movable object may be inclined relative to the work area such that the movable object is not directly above the work area. By controlling the movable object to move to the target position, which is above the work area and at least partially offset horizontally, safety issues when working on the second end of the rope in the work area, may be avoided, and safety problems may be prevented.

In some embodiments, the aircraft may automatically determine and move to the target position, reducing the user's workload and the requirements for the pilot. The aircraft may also determine the target position based on the user's second control operation. By displaying the movable range or determining the response to the second control operation based on the movable range, the user errors may be prevented from causing the second end of the rope to move outside the work area, also reducing the difficulty of operation and improving efficiency.

The specific principles and implementation methods of the control method provided in the present embodiment are at least partially similar to the control method of the embodiment shown in FIG. 1, and will not be repeated here.

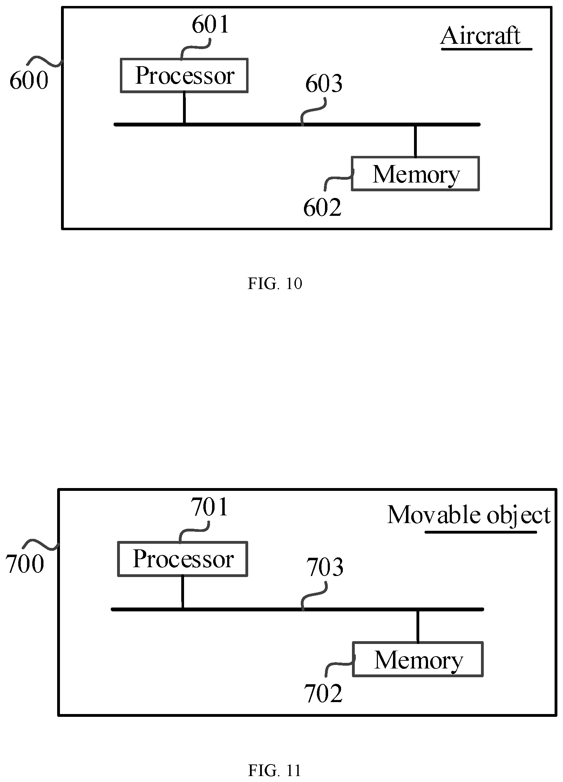

Referring to FIG. 10 in conjunction with the foregoing embodiments, FIG. 10 is a schematic structural diagram of an aircraft 600 according to another embodiment of the present disclosure.

The aircraft 600 may be capable of carrying a rope. A first end of the rope may be connected to the aircraft 600, and a second end of the rope may be used to carry a target object.

The aircraft 600 may include one or more processors 601, which operate individually or jointly to execute the control method provided by any embodiment of the present disclosure.

For example, the aircraft 600 may also include a memory 602.

Exemplarily, the one or more processors 601 and the memory 602 may be connected via a bus 603, such as an I2C (Inter-Integrated Circuit) bus.

For example, the one or more processors 601 may include a microcontroller unit (MCU), a central processing unit (CPU), or a digital signal processor (DSP), etc.

For example, the memory 602 may include a Flash chip, a read-only memory (ROM), a hard disk, an optical disk, a USB flash drive, or a portable hard drive, etc.

The one or more processors 601 may be used to run a computer program stored in the memory 602, to implement the steps of the aforementioned method when executing the computer program.

In some embodiments, the one or more processors 601 may be used to run a computer program stored in the memory 602, and, when executing the computer program, may be configured to:

control the aircraft to be directly above the work area, and control the second end to be located within the work area, where the length of the rope released by the aircraft is greater than or equal to the height of the aircraft relative to the work area; and

control the aircraft to move to a target position outside the area directly above the work area, such that at least the vehicle body of the aircraft is not directly above the work area, where the second end of the rope is still located within the work area when the aircraft moves to the target position.

In some embodiments, the one or more processors 601 may be used to run a computer program stored in the memory 602, and, when executing the computer program, may be configured to:

control the aircraft to fly directly above a work area, where the aircraft system includes the aircraft and a rope system attached to the aircraft, with the rope system being capable of releasing a rope, the free end of which is used to carry the target object;

when the aircraft is directly above the work area, control the rope system to release the rope, causing the free end of the rope to descend into the work area; and

control the aircraft to deviate from the work area while simultaneously controlling the free end of the rope to remain within the work area.

In some embodiments, the one or more processors 601 may be used to run a computer program stored in the memory 602, and, when executing the computer program, may be configured to:

control the aircraft to fly directly above the work area, where the aircraft system includes the aircraft and a rope system attached to the aircraft, with the rope system being capable of releasing a rope, the free end of which is used to attach the target object;

when the aircraft is directly above the work area, control the rope system to release the rope;

control the length of the rope released by the rope system such that the length of the rope released by the aircraft is greater than or equal to the height of the aircraft relative to the work area; and

control the aircraft to deviate from the work area while simultaneously controlling the free end of the rope to remain within the work area, to allow the rope to attach the target object.

In some embodiments, the one or more processors 601 may be used to run a computer program stored in the memory 602, and, when executing the computer program, may be configured to:

control the aircraft to fly directly above the work area, where the aircraft system includes the aircraft and a rope system attached to the aircraft, with the rope system being capable of releasing a rope with a target object attached to its free end;

when the aircraft is directly above the work area, control the rope system to release the rope, causing the target object attached to the rope to descend into the work area;

control the length of the rope released by the rope system, such that the length of the rope released by the aircraft is greater than or equal to the height of the aircraft relative to the work area;

control the aircraft to deviate from the work area, while simultaneously controlling the free end of the rope to remain within the work area, to unload the target object from the rope.

The specific principles and implementation methods of the aircraft provided in the embodiments of the present disclosure are similar to the control methods of the foregoing embodiments, and will not be repeated here.

Referring to FIG. 11 in conjunction with the foregoing embodiments, FIG. 11 is a schematic structural diagram of a movable object 700 according to another embodiment of the present disclosure.

The movable object 700 may be capable of carrying a rope. A first end of the rope may be connected to the movable object 700, and a second end of the rope may be used to carry a target object.

The movable object 700 may include one or more processors 701, which operate individually or jointly to execute the control method for the movable object provided by any embodiment of the present disclosure.

For example, the movable object 700 may also include a memory 702.

Exemplarily, the one or more processors 701 and the memory 702 may be connected via a bus 703, such as an I2C (Inter-Integrated Circuit) bus.

For example, the one or more processors 701 may include a microcontroller unit (MCU), a central processing unit (CPU), or a digital signal processor (DSP), etc.

For example, the memory 702 may include a Flash chip, a read-only memory (ROM), a hard disk, an optical disk, a USB flash drive, or a portable hard drive, etc.

The one or more processors 701 may be used to run a computer program stored in the memory 702, to implement the steps of the aforementioned control method for the movable object when executing the computer program.

In some embodiments, the one or more processors 701 may be used to run a computer program stored in the memory 702, and, when executing the computer program, may be configured to:

control the movable object to move to a target position; and

control the second end to move to the work area.

The target position may be located above the work area and may at least partially offset horizontally from the work area. The rope released from the movable object may be inclined relative to the work area such that the movable object is not directly above the work area.

The detailed principle and implementation of the movable object provided by the present disclosure are similar to the control method for the movable object provided by the above embodiments, which will not be repeated here.

The present disclosure also provides a computer-readable storage medium storing a computer program that, when executed by a processor, causes the processor to implement the steps of the method provided in the above embodiments.

The computer-readable storage medium may be an internal storage unit of the aircraft or the movable object described in any of the foregoing embodiments, such as the aircraft's hard drive or memory. The computer-readable storage medium may also be an external storage device of the aircraft or the movable object, such as a plug-in hard drive, smart media card (SMC), secure digital (SD) card, flash card, etc., equipped on the aircraft.

It should be understood that the terminology used herein is for the purpose of describing particular embodiments only and is not intended to limit the present disclosure.

It should also be understood that the term "and/or" as used in the present disclosure and the appended claims refers to any combination and all possible combinations of one or more of the associated listed items, and includes such combinations.

The embodiments of the present disclosure have been described above. However, these embodiments are for illustrative purposes only and are not intended to limit the scope of the present disclosure. Although various embodiments have been described above, this does not mean that the measures in the various embodiments cannot be used advantageously in combination. Various substitutions and modifications may be made by those skilled in the art without departing from the scope of the present disclosure, and all such substitutions and modifications should fall within the scope of the present disclosure.

**Claims**

1. A control method for an aircraft system, the aircraft system including an aircraft capable of carrying a rope, with a first end of the rope being connected to the aircraft and a second end of the rope being used to carry a target object, the method comprising:

   controlling the aircraft to be located directly above a work area, and controlling the second end of the rope to be located within the work area and a length of the rope released by the aircraft to be greater than or equal to a height of the aircraft relative to the work area; and
   controlling the aircraft to move to a target position outside an area directly above the work area, such that at least a vehicle body of the aircraft is not directly above the work area,
   wherein when the aircraft moves to the target position, the second end of the rope is still located within the work area.

2. The control method for the aircraft system according to claim 1, wherein:

   the target position is configured as one or more positions within a movable range of the aircraft, wherein the movable range is a range determined by a maximum horizontal distance the aircraft is able to fly away from the work area when the second end of the rope is located within the work area; and
   controlling the aircraft to move to the target position outside the area directly above the work area includes:
   controlling the aircraft to move out of the area directly above the work area, the target position being within the movable range.

3. The control method for the aircraft system according to claim 2, wherein the movable range is determined based on the length of the released rope and the height of the aircraft relative to the work area.

4. The control method for the aircraft system according to any one of claims 1 to 3, further comprising, before controlling the aircraft to move to the target position outside the area directly above the work area:
   receiving a preset operation instruction, wherein the preset operation instruction includes an instruction to load the target object and/or unload the target object at the second end of the rope.

5. The control method for the aircraft system according to claim 4, wherein the preset operation instruction originates from a user's first control operation.

6. The control method for the aircraft system according to claim 4, wherein the preset operation instruction originates from the aircraft itself.

7. The control method for the aircraft system according to claim 6, wherein the preset operation instruction originates from the aircraft's recognition of markers.

8. The control method for the aircraft system according to any one of claims 1 to 7, further comprising, before controlling the aircraft to move to the target position outside the area directly above the work area:
receiving a second control operation from a user, wherein the second control operation is used to indicate the target position.

9. The control method for the aircraft system according to claim 8, wherein the movable range of the aircraft is configured to be displayed.

10. The control method for the aircraft system according to claim 8, wherein the second control operation includes the user determining a target image area on a display screen, wherein the target image area is used to indicate the target position.

11. The control method for the aircraft system according to claim 10, wherein:
in response to the target image area being within the movable range of the aircraft, controlling the aircraft to move to the target position outside the area directly above the work area is executed.

12. The control method for the aircraft system according to claim 10, further comprising:
in response to the target image area being outside the movable range of the aircraft, controlling the aircraft to move along a direction indicated by the position of the target image area to the boundary of the movable range.

13. The control method for the aircraft system according to claim 10, further comprising:
in response to the target image area being outside the movable range of the aircraft, prohibiting the aircraft from moving.

14. The control method for the aircraft system according to claim 8, wherein the second control operation includes the user's operation of a control on a control terminal of the aircraft, wherein the control is used to control the flight direction and/or flight speed of the aircraft.

15. The control method for the aircraft system according to claim 14, wherein controlling the aircraft to move to the target position outside the area directly above the work area includes:

in response to the target position of the aircraft being within the movable range of the aircraft, controlling the aircraft to move to the target position outside the area directly above the work area; and
in response to the target position of the aircraft being at the boundary of the movable range of the aircraft, prohibiting the aircraft from moving outside the movable range of the aircraft.

16. The control method for the aircraft system according to any one of claims 1 to 15, further comprising:
outputting an alarm message when the distance between the position of the aircraft and the boundary of the movable range of the aircraft is less than or equal to a preset distance threshold.

17. The control method for the aircraft system according to any one of claims 1 to 16, further comprising:
determining the target position based on the movable range of the aircraft and environmental information of the aircraft's position.

18. The control method for the aircraft system according to claim 17, wherein:

the environmental information includes obstacle information; and
determining the target position based on the movable range of the aircraft and the environmental information of the aircraft's position includes:
determining the target position based on positions of obstacles within the movable range of the aircraft, wherein the target position is different from the position of the obstacles.

19. The control method for the aircraft system according to any one of claims 1 to 18, wherein:

the work area is a stationary area;
when the aircraft is directly above the work area, the aircraft hovers directly above the work area; and
when the aircraft is at the target position, the aircraft hovers at the target position.

20. The control method for the aircraft system according to any one of claims 1 to 18, wherein:

the work area is an area on a mobile platform;
when the aircraft is directly above the work area, the aircraft remains relatively stationary with respect to the mobile platform; and
when the aircraft is at the target position, the aircraft remains relatively stationary with respect to the mobile platform.

21. The control method for the aircraft system according to any one of claims 1 to 20, wherein the aircraft includes a logistics aircraft, and the work area includes a preset loading/unloading area for providing loading/unloading space for the logistics aircraft.

22. The control method for the aircraft system according to any one of claims 1 to 20, wherein in response to the aircraft moving to the target position, neither the vehicle body nor propellers of the aircraft is located directly above the work area.

23. The control method for the aircraft system according to any one of claims 1 to 20, wherein in response to the aircraft being located directly above the work area, the second end descends vertically into the work area under the influence of gravity.

24. A control method for a movable object, the movable object being configured to carry a rope, with a first end of the rope being connected to the movable object and a second end of the rope being configured to carry a target object, the method comprising:

   controlling the movable object to move to a target position; and
   controlling the second end to move to a work area,
   wherein the target position is located above the work area and at least partially offset from the work area in the horizontal direction, and the rope released from the movable object is inclined relative to the work area such that the movable object is not located directly above the work area.

25. The control method for the movable object according to claim 24, wherein controlling the second end to move to the work area includes:
before controlling the movable object to move to the target position, controlling the movable object to move to a position directly above the work area, such that the second end descends into the work area under the action of gravity, wherein the length of the rope released by the movable object is greater than the height of the movable object relative to the work area.

26. The control method for the movable object according to claim 24, wherein controlling the second end to move to the work area includes:
in response to the movable object being located at the target position and the second end being located directly below the target position, controlling a traction device to pull the second end to move to the work area.

27. The control method for the movable object according to claim 25, wherein:

   the target position is configured as one or more positions within a movable range of the movable object, wherein the movable range is a range determined by a maximum horizontal distance the movable object is able to move away from the work area when the second end of the rope is located within the work area; and
   controlling the movable object to move to the target position outside the area directly above the work area includes: controlling the movable object to move out of the work area and the target position to be within the movable range.

28. The control method for the movable object according to claim 25, wherein the movable range is determined based on the length of the released rope and the height of the movable object relative to the work area.

29. The control method for the movable object according to any one of claims 24 to 25 and 27 to 28, further comprising, before controlling the movable object to move to the target position outside the area directly above the work area:
receiving a preset operation instruction, wherein the preset operation instruction includes an instruction to load the target object and/or unload the target object at the second end of the rope.

30. The control method for the movable object according to claim 29, wherein the preset operation instruction originates from a user's first control operation.

31. The control method for the movable object according to claim 29, wherein the preset operation instruction originates from the movable object itself.

32. The control method for the movable object according to claim 31, wherein:
the preset operation instruction originates from the movable object's recognition of markers.

33. The control method for the movable object according to any one of claims 24 to 25 and 27 to 32, further comprising, before controlling the movable object to move to the target position outside the area directly above the work area:
receiving a second control operation of a user, wherein the second control operation is used to indicate the target position.

34. The control method for the movable object according to claim 33, wherein the movable range of the movable object is configured to be displayed.

35. The control method for the movable object according to claim 33, wherein the second control operation includes the user determining a target image area on the display screen, wherein the target image area is used to indicate the target position.

36. The control method for the movable object according to claim 35, wherein, in response to the target image area being within the movable range of the movable object, controlling the movable object to move to the target position outside the area directly above the work area is executed.

37. The control method for the movable object according to claim 35, further comprising:
in response to the target image area being outside the movable range of the movable object, controlling the movable object to move along a direction indicated by the position of the target image area to the boundary of the movable range.

38. The control method for the movable object according to claim 35, further comprising:
in response to the target image area being outside the movable range of the movable object, prohibiting the movable object from moving.

39. The control method for the movable object according to claim 33, wherein the second control operation includes the user's operation of a control on a control terminal of the movable object, wherein the control is used to control the flight direction and/or flight speed of the movable object.

40. The control method for the movable object according to claim 39, wherein controlling the movable object to move to the target position outside the area directly above the work area includes:

in response to the target position of the movable object being within the movable range of the movable object, controlling the movable object to move to the target position outside the area directly above the work area; and
in response to the target position of the movable object being at the boundary of the movable range of the movable object, prohibiting the movable object from moving outside the movable range of the movable object.

41. The control method for the movable object according to any one of claims 24 to 25 and 27 to 40, further comprising:
outputting an alarm message when the distance between the position of the movable object and the boundary of the movable range of the movable object is less than or equal to a preset distance threshold.

42. The control method for the movable object according to any one of claims 24 to 25 and 27 to 41, further comprising:
determining the target position based on the movable range of the movable object and environmental information of the movable object's position.

43. The control method for the movable object according to claim 42, wherein:

the environmental information includes obstacle information; and
determining the target position based on the movable range of the movable object and the environmental information of the movable object's position includes: determining the target position based on positions of obstacles within the movable range of the movable object, wherein the target position is different from the positions of the obstacles.

44. The control method for the movable object according to any one of claims 24 to 25 and 27 to 43, wherein:

the work area is a stationary area;
when the movable object is directly above the work area, the movable object hovers directly above the work area; and
when the movable object is at the target position, the movable object hovers at the target position.

45. The control method for the movable object according to any one of claims 24 to 25 and 27 to 43, wherein:

the work area is an area on a mobile platform;
when the movable object is directly above the work area, the movable object remains relatively stationary with respect to the mobile platform; and
when the movable object is at the target position, the movable object remains relatively stationary with respect to the mobile platform.

46. The control method for the movable object according to any one of claims 24 to 25 and 27 to 45, wherein:
the movable object includes a logistics movable object, and the work area includes a preset loading/unloading area for providing loading/unloading space for the logistics movable object.

**47.** The control method for the movable object according to any one of claims 24 to 25 and 27 to 45, wherein: in response to the movable object moving to the target position, neither the vehicle body nor the propeller of the movable object is located directly above the work area.

**48.** The control method for the movable object according to any one of claims 24 to 25 and 27 to 45, wherein: in response to the movable object being located directly above the work area, the second end descends vertically into the work area under the influence of gravity.

**49.** An aircraft, capable of carrying a rope, with a first end of the rope being connected to the aircraft and a second end of the rope being used to carry a target object, comprising: one or more processors, configured to operate independently or cooperatively to:

control the aircraft to be located directly above a work area, and control the second end of the rope to be located within the work area and the length of the rope released by the aircraft being greater than or equal to the height of the aircraft relative to the work area; and control the aircraft to move to a target position outside an area directly above the work area, such that at least a vehicle body of the aircraft is not directly above the work area; wherein, when the aircraft moves to the target position, the second end of the rope is still located within the work area.

**50.** The aircraft according to claim 49, wherein:

the target position is configured as one or more positions within a movable range of the aircraft, wherein the movable range is a range determined by a maximum horizontal distance the aircraft is able to fly away from the work area when the second end of the rope is located within the work area; and controlling the aircraft to move to the target position outside the area directly above the work area includes: controlling the aircraft to move out of the area directly above the work area, the target position being within the movable range.

**51.** The aircraft according to claim 50, wherein the movable range is determined based on the length of the released rope and the height of the aircraft relative to the work area.

**52.** The aircraft according to any one of claims 49 to 51, wherein the one or more processors are further configured to, before controlling the aircraft to move to the target position outside the area directly above the work area:
receive a preset operation instruction, wherein the preset operation instruction includes an instruction to load the target object and/or unload the target object at the second end of the rope.

**53.** The aircraft according to claim 52, wherein the preset operation instruction originates from a user's first control operation.

**54.** The aircraft according to claim 52, wherein the preset operation instruction originates from the aircraft itself.

**55.** The aircraft according to claim 54, wherein the preset operation instruction originates from the aircraft's recognition of markers.

**56.** The aircraft according to any one of claims 49 to 55, wherein the one or more processors are further configured to, before controlling the aircraft to move to the target position outside the area directly above the work area:
receive a second control operation, wherein the second control operation is used to indicate the target position.

**57.** The aircraft according to claim 56, wherein the movable range of the aircraft is configured to be displayed.

**58.** The aircraft according to claim 56, wherein the second control operation includes the user determining a target image area on the display screen, wherein the target image area is used to indicate the target position.

**59.** The aircraft according to claim 58, wherein the one or more processors are further configured to, in response to the target image area being within the movable range of the aircraft, execute controlling the aircraft to move to the target position outside the area directly above the work area.

**60.** The aircraft according to claim 58, wherein the one or more processors are further configured to:
in response to the target image area being outside the movable range of the aircraft, control the aircraft to move along a direction indicated by the position of the target image area to the boundary of the movable range.

**61.** The aircraft according to claim 58, wherein the one or more processors are further configured to:
in response to the target image area being outside the movable range of the aircraft, prohibit the aircraft from moving.

**62.** The aircraft according to claim 56, wherein the second control operation includes the user's operation of a control on a control terminal of the aircraft, wherein the control is used to control the flight direction and/or flight speed of the aircraft.

**63.** The aircraft according to claim 62, wherein controlling the aircraft to move to the target position outside the area directly above the work area includes:

in response to the target position of the aircraft being within the movable range of the aircraft, controlling the aircraft to move to the target position outside the area directly above the work area; and
in response to the target position of the aircraft being at the boundary of the movable range of the aircraft, prohibiting the aircraft from moving outside the movable range of the aircraft.

**64.** The aircraft according to any one of claims 49 to 63, wherein the one or more processors are further configured to:
output an alarm message when the distance between the position of the aircraft and the boundary of the movable range of the aircraft is less than or equal to a preset distance threshold.

**65.** The aircraft according to any one of claims 49 to 64, wherein the one or more processors are further configured to:
determine the target position based on the movable range of the aircraft and environmental information of the aircraft's position.

**66.** The aircraft according to claim 65, wherein:

the environmental information includes obstacle information; and
determining the target position based on the movable range of the aircraft and the environmental information of the aircraft's position includes: determining the target position based on positions of obstacles within the movable range of the aircraft, wherein the target position is different from the position of the obstacles.

**67.** The aircraft according to any one of claims 49 to 66, wherein:

the work area is a stationary area;
when the aircraft is directly above the work area, the aircraft hovers directly above the work area; and
when the aircraft is at the target position, the aircraft hovers at the target position.

**68.** The aircraft according to any one of claims 49 to 66, wherein:

the work area is an area on a mobile platform;
when the aircraft is directly above the work area, the aircraft remains relatively stationary with respect to the mobile platform; and
when the aircraft is at the target position, the aircraft remains relatively stationary with respect to the mobile platform.

**69.** The aircraft according to any one of claims 49 to 68, wherein the aircraft includes a logistics aircraft, and the work area includes a preset loading/unloading area for providing loading/unloading space for the logistics aircraft.

**70.** The aircraft according to any one of claims 49 to 68, wherein:
in response to the aircraft moving to the target position, neither the vehicle body nor the propeller of the aircraft is located directly above the work area.

**71.** The aircraft according to any one of claims 49 to 68, wherein in response to the aircraft being located directly above the work area, the second end descends vertically into the work area under the influence of gravity.

**72.** A movable object capable of carrying a rope, with a first end of the rope being connected to the movable object and a second end of the rope being used to carry a target object, comprising:
one or more processors, configured to work independently or cooperatively, to implement steps of the control method for the movable object according to any one of claims 24 to 48.

**73.** A control method for an aircraft system, comprising:

controlling the aircraft to fly to directly above a work area, wherein: the aircraft system includes the aircraft and a rope system attached to the aircraft, the rope system is capable of releasing a rope, and a free end of the rope is used to carry a target object;
when the aircraft is directly above the work area, controlling the rope system to release the rope, causing the free end of the rope to descend into the work area; and
controlling the aircraft to deviate from the work area while simultaneously controlling the free end of the rope to remain within the work area.

**74.** A loading method of an aircraft, comprising:

controlling the aircraft to fly to directly above a work area, wherein: the aircraft system includes the aircraft and a rope system attached to the aircraft, and the rope system is capable of releasing a rope, a free end of which is used to attach a target object;

when the aircraft is directly above the work area, controlling the rope system to release the rope; controlling the length of the rope released by the rope system such that the length of the rope released by the aircraft is greater than or equal to the height of the aircraft relative to the work area; and

controlling the aircraft to deviate from the work area while simultaneously controlling the free end of the rope to remain within the work area so that the rope is able load the target object.

75. An unloading method of an aircraft, comprising:

controlling the aircraft to fly to directly above a work area, wherein: the aircraft system includes the aircraft and a rope system attached to the aircraft, and the rope system is capable of releasing a rope, the free end of which is attached to a target object;

when the aircraft is directly above the work area, controlling the rope system to release the rope, causing the target object attached to the rope to descend into the work area;

controlling the length of the rope released by the rope system, such that the length of the rope released by the aircraft is greater than or equal to the height of the aircraft relative to the work area; and

controlling the aircraft to deviate from the work area, while simultaneously controlling the free end of the rope to remain within the work area, to facilitate the unloading of the target object from the rope.

76. The control method for the movable object according to any one of claims 73 to 75, wherein controlling the aircraft to deviate from the work area while simultaneously controlling the free end of the rope to remain within the work area includes:

releasing the rope such that the free end of the rope remains within the work area during the process of the aircraft deviating from the work area.

Control aircraft to be located directly above a work area, and control the second end of the rope to be located within the work area, such that the length of the rope released by the aircraft is greater than or equal to the height of the aircraft relative to the work area ⌇S110

Control the aircraft to move to a target position outside the work area, such that at least a vehicle body of the aircraft is not directly above the work area, where the second end of the rope remains within the work area when the aircraft moves to the target position ⌇S120

FIG. 1

100

200

300

FIG. 2

Aircraft

Rope

Work area

FIG. 3a

Target position

Aircraft

Rope

Work area

FIG. 3b

FIG. 4a

FIG. 4b

| Control aircraft to fly to the area directly above the work area, where the aircraft system may include the aircraft and a rope system attached to the aircraft, with the rope system being able to release a rope, a free end of which is used to carry a target object. | S210 |
|---|---|
| When the aircraft is directly above the work area, control the rope system to release the rope, so that the free end of the rope descends into the work area | S220 |
| Control the aircraft to deviate from the work area while simultaneously controlling the free end of the rope to remain within the work area | S230 |

FIG. 5

| Control aircraft to fly to the area directly above the work area, where the aircraft system may include the aircraft and a rope system attached to the aircraft, with the rope system being able to release a rope, a free end of which is used to carry a target object | S310 |
|---|---|
| When the aircraft is directly above the work area, control the rope system to release the rope | S320 |
| Control the length of the rope released by the rope system such that the length of the rope released by the aircraft is greater than or equal to the height of the aircraft relative to the work area | S330 |
| Control the aircraft to deviate from the work area while simultaneously controlling the free end of the rope to remain within the work area, such that the rope can be used to attach the target object | S340 |

FIG. 6

Control aircraft is fly to the area directly above the work area, where the aircraft system may include the aircraft and a rope system attached to the aircraft, with the rope system being able to release a rope, a free end of which carries a target object — S410

When the aircraft is directly above the work area, control the rope system to release the rope, such that the target object carried by the free end of the rope descends into the work area — S420

Control the length of the rope released by the rope system such that the length of the rope released by the aircraft is greater than or equal to the height of the aircraft relative to the work area — S430

Control the aircraft to deviate from the work area while simultaneously controlling the free end of the rope to remain within the work area, such that the target object is able to be unloaded from the rope — S440

FIG. 7

Control the movable object to move to a target position — S510

Control the second end to move to the work area, where the target position is located above the work area and at least partially offset from the work area in the horizontal direction, and the rope released from the movable object is inclined relative to the work area such that the movable object is not directly above the work area — S520

FIG. 8

Target position

Movable object

Rope

Work area

FIG. 9a

Target position

Movable object

Rope

Work area

FIG. 9b

601

Processor

603

Aircraft

600

Memory

602

FIG. 10

701

Processor

703

Movable object

700

Memory

702

FIG. 11

## INTERNATIONAL SEARCH REPORT

| | International application No. |
|---|---|
| | **PCT/CN2024/071638** |

**A. CLASSIFICATION OF SUBJECT MATTER**

B64D1/00(2006.01)i

According to International Patent Classification (IPC) or to both national classification and IPC

**B. FIELDS SEARCHED**

Minimum documentation searched (classification system followed by classification symbols)

IPC:B64

Documentation searched other than minimum documentation to the extent that such documents are included in the fields searched

Electronic data base consulted during the international search (name of data base and, where practicable, search terms used)

CNKI, CNTXT, ENTXTC: 绳, 线缆, 作业区, 作业范围, 安全, 障碍; rope? , cable? , work+, safety, obstacle? , barrier?

**C. DOCUMENTS CONSIDERED TO BE RELEVANT**

| Category* | Citation of document, with indication, where appropriate, of the relevant passages | Relevant to claim No. |
|---|---|---|
| X | CN 109850150 A (ZHU BIN) 07 June 2019 (2019-06-07) <br> description, pages 3-5, and figures 1-8 | 1-76 |
| A | CN 213862677 U (HOHHOT POWER SUPPLY BUREAU OF INNER MONGOLIA POWER (GROUP) CO., LTD.) 03 August 2021 (2021-08-03) <br> entire document | 1-76 |
| A | CN 107390720 A (TAO WENYING) 24 November 2017 (2017-11-24) <br> entire document | 1-76 |
| A | CN 110496325 A (SHANGHAI KUNGE UNMANNED PLANE TECHNOLOGY CO., LTD.) 26 November 2019 (2019-11-26) <br> entire document | 1-76 |
| A | CN 206288241 U (TARIM UNIVERSITY) 30 June 2017 (2017-06-30) <br> entire document | 1-76 |
| A | US 2011303783 A1 (BRENNER HANNO et al.) 15 December 2011 (2011-12-15) <br> entire document | 1-76 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 July 2024** | **31 August 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| PCT/CN2024/071638 |

| Patent document cited in search report | | | Publication date (day/month/year) | Patent family member(s) | | | Publication date (day/month/year) |
|---|---|---|---|---|---|---|---|
| CN | 109850150 | A | 07 June 2019 | None | | | |
| CN | 213862677 | U | 03 August 2021 | None | | | |
| CN | 107390720 | A | 24 November 2017 | None | | | |
| CN | 110496325 | A | 26 November 2019 | None | | | |
| CN | 206288241 | U | 30 June 2017 | None | | | |
| US | 2011303783 | A1 | 15 December 2011 | DE | 102010023228 | A1 | 15 December 2011 |
| | | | | DE | 102010023228 | B4 | 12 July 2012 |
| | | | | US | 8622336 | B2 | 07 January 2014 |

Form PCT/ISA/210 (patent family annex) (July 2022)